# EUROPEAN PATENT APPLICATION

(11) **EP 1 462 376 A2**
(43) Date of publication of application: **29.09.2004**
(21) Application number: 04290801.2
(22) Date of filing: 25.03.2004
(51) Int. Cl.: B65C 9/22, B05C 1/02, B05C 13/02

(54) **Improved bottle contact coating apparatus and improved sponges for use therein**

(30) Priority: 28.03.2003 US 458307 P; 03.03.2004 US 792123
(71) Applicant: Atofina Chemicals, Inc., Philadelphia, PA 19103-3222 (US)
(72) Inventor: Eisen, Heinz G., Essen 45307 (DE); Hoekman, Leendert, 4461 NL Goes (NL)
(74) Representative: Treuil, Claude

(57) **Abstract**

An improved sponge applicator and an improved contact coating apparatus (28) for coating with liquid the outside surface of containers such as glass or plastic bottles (10) is provided. The improved sponge applicator (28) comprises an open cell foam having at least one surface for contacting and applying liquid to the container, and at least one section having a sealed surface for retarding flow of liquid from the sponge (26) through the sealed surface (31) and at least one unsealed surface for contacting the container, the sponge (26) having an internal porosity allowing for flow of liquid through the open cell structure of the sponge (26). A method of sealing surfaces of an open-cell foam is also provided comprising swelling the foam with liquid, expelling excess liquid from the sponge (26) and applying a sealant to the surface of the foam while the foam is still in its swelled shape, and curing the sealant on the sponge (26). An improved contact coating apparatus (28) for bottles (10) is also provided comprising means for rotating a container to be coated, a sponge coating applicator (28) having several scaled surfaces and at least one unsealed surface, means for contacting the container with an unsealed surface of the sponge coating applicator (28), and means for supplying coating liquid to the sponge coating applicator (28).

## Description

### FIELD OF THE INVENTION

Application of liquid to the outside surface of a bottle that is moving on a conveyor path usually at high speeds has been practiced commercially. The apparatus for applying a liquid coating are designed to either spray the liquid onto the bottle or designed for direction application (contact coating) through contacting the bottle with an applicator containing the liquid which results in transfer of liquid onto the bottle surface. Such apparatus for coating a liquid onto the surface of a bottle or container and are well known to those skilled in the art. One type of coating apparatus involving direct contact between the bottle and an applicator containing the liquid utilizes a foamed rubber sponge as the liquid containing applicator that touches the bottle. The present invention concerns an improved sponge design for applying liquid onto the surface of a container.

A machine for direct contact coating of bottles is usually equipped with a sponge that transfers the coating liquid to the bottles and a belt that drives the bottles along the sponge and rotates the bottle while contacting the sponge. The contact coating apparatus is placed over a conveyer belt that transports bottles usually in a plant that utilizes bottles in a manufacturing process such as a filling plant. The rotating belt and the usually static sponge of the coating machine form a coating lane through which the bottles must pass while being transported on the conveyor belt. The bottle rotates while contacting the sponge. While the bottle is revolving and simultaneously passing through the coating lane it takes the coating liquid off the sponge. Normally the sponge length is chosen to let the bottle revolve 3 times to ensure good coating properties. A direct contact coating machine can consist of one or several lanes, each having an applicator.

Most liquids being coated onto bottles by direct contact coating apparatus are water based solutions or emulsions. A foamed rubber sponge having a porosity suitable for applying the desired quantity of liquid coating depends on the viscosity of the liquid and the thickness of the desired coating. Examples of liquids being coated onto the surface of bottles are lubricating liquids designed to reduce friction and scratching of bottles when bottles contact each other. Another type of liquid applied to bottles is a liquid designed to mask or hide (camouflage) scratches on recycled bottles when the bottles are being refilled.

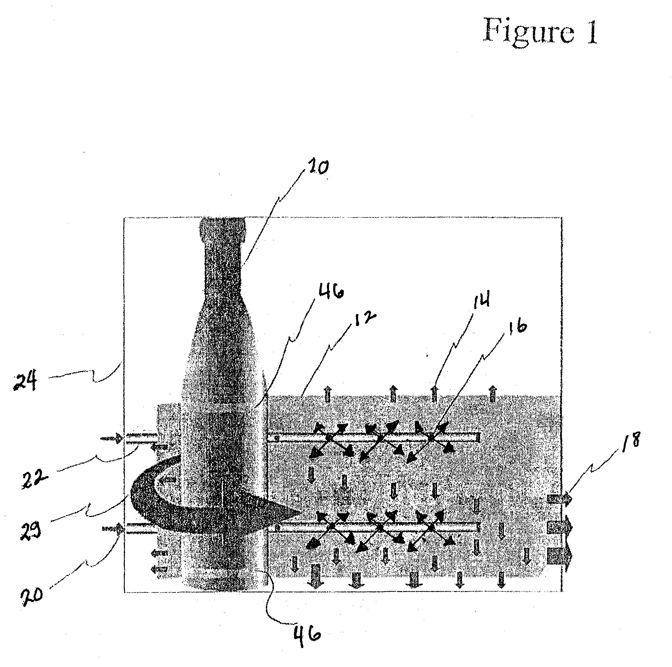

A typical sponge applicator and a portion of a contact coating apparatus is shown in Figure 1.

Sponge (12) with feeding lances (22) of the apparatus is shown. The feeding lances supply coating liquid to the sponge. The one surface of the sponge contacts the bottle (10)The lances feed the coating liquid into the sponge. The lances have holes to be able to distribute the liquid into the sponge at all sections. In order to get a good distribution of the coating material in the sponge, at least 2 lances are used. The bottle rolls along the sponge and coating liquid is transferred to the bottle from the surface of the sponge that contacts the bottle. The sponge releases the coating liquid not only through the front or bottle contact side but also through it's other 5 surfaces where it is not desired. That waste coating material increasing the consumption dramatically. Although two lances are used the liquid is not distributed totally homogeneous inside the sponge. The liquid always has the tendency to flow down to the lower parts of the sponge thus feeding less into the upper section of the bottle.

The sponge is held within a frame or adequate box that lets only the front side of the sponge

### Summary of the Invention

An improved sponge applicator and an improved contact coating apparatus for coating with liquid the outside surface of containers such as glass or plastic bottles is provided. The improved sponge applicator comprises an open cell foam having at least one surface for contacting and applying liquid to the container, and at least one section having a sealed surface for retarding flow of liquid from the sponge through the sealed surface and at least one unsealed surface for contacting the container, the sponge having an internal porosity allowing for flow of liquid through the open cell structure of the sponge. A method of sealing surfaces of an open-cell foam is also provided comprising swelling the foam with liquid, expelling excess liquid from the sponge and applying a sealant to the surface of the foam while the foam is still in its swelled shape, and curing the sealant on the sponge An improved contact coating apparatus for bottles is also provided comprising means for rotating a container to be coated, a sponge coating applicator having several sealed surfaces and at least one unsealed surface, means for contacting the container with an unsealed surface of the sponge coating applicator, and means for supplying coating liquid to the sponge coating applicator.

### Brief description of the Drawings

Figure 1 depicts a prior art sponge (12) and a portion of a contact coating apparatus (24) with a bottle (10) being rotated in the direction shown by the arrow (25) while contacting the sponge.

Figure 2 through 5 depict different embodiments according to the present invention of an improved sponge (26) and a portion of an improved contact coating apparatus (28) with a bottle (10) being rotated while contacting the sponge.Detailed Description of the Invention and the

### Preferred Embodiments

Figure 1 depicts a prior art sponge (12) and a portion of a contact coating apparatus (24) with a bottle (10) being rotated in the direction shown by the arrow (25) while contacting the sponge. Lance portions (22) of the coating apparatus are shown with arrows (20) depicting the feeding of coating liquid into the lances and into the sponge through holes (16) in the lances. Arrows (14) and (18) show the direction of liquid flow within and out of the sponge. The relative sizes of the arrows (20); (14); (18); through holes (16)) are proportional to liquid flow volumes. In the prior art embodiment shown in Figure 1, liquid is applied through the lances (arrows (20)) leaks out of the sponge, (arrows (14) and (18))

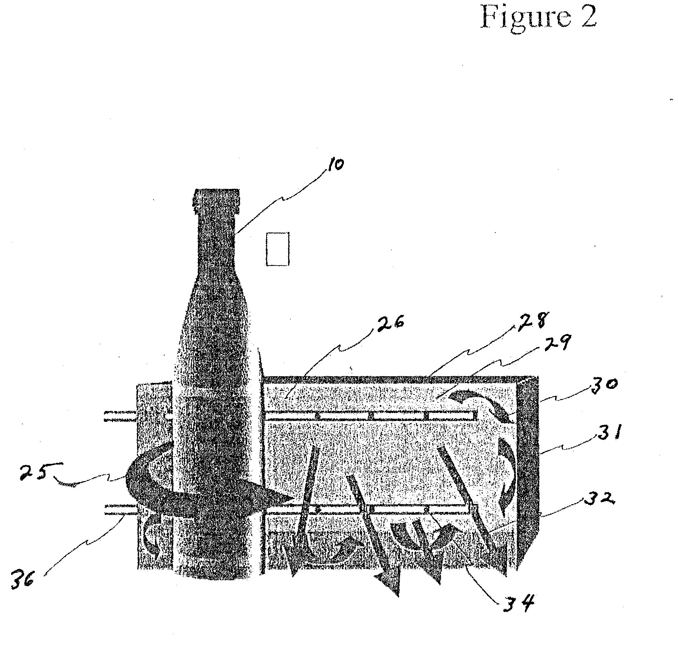

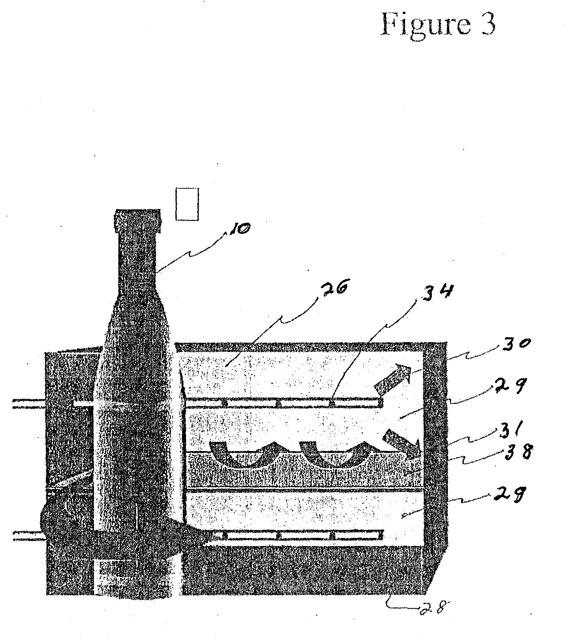

Figure 2 depicts an improved sponge (26) and a portion of an improved contact coating apparatus (28) with a bottle (10) being rotated while contacting the sponge. Lance portions (36) of the coating apparatus are shown for feeding of coating liquid into the lances and into the sponge through holes (34) in the lances. Curved arrows (30) show the direction of liquid flow within the sponge being blocked from exiting the sponge through sealed surfaces (31) of sponge (26). The sealed surfaces are those which are not on the front side (the other 5 sides are "non-coating sides). Liquid flows out of the sponge through surface (29) that contacts the bottle (10). The straight arrows (20) depict the flow of liquid through surface (29). The relative sizes of the curved and straight arrows are proportional to liquid flow volumes. Liquid cannot pass through the sealed surfaces (31) of the sponge (curved arrows), just through the front surface side (29), (straight arrows) that contacts the bottle.Figure 3 depicts an improved sponge (26) and a portion of an improved contact coating apparatus (28) with a bottle (10) being rotated while contacting the sponge. Lance portions (36) of the coating apparatus are shown for feeding of coating liquid into the lances and into the sponge through holes (34) in the lances. Curved arrows show the direction of liquid flow within the sponge being blocked from exiting the top section of the sponge through sealed internal surface (38) of sponge (26). The exterior sealed surfaces are those which are not on the front side (the other 5 sides are "non-coating sides except for internal sealed surface and additionally a "barrier" sealing between top and bottom zone of the sponge (38). Liquid flows out of the sponge through surface (29) that contacts the bottle (10). The straight-arrows depict the flow of liquid through surface (29). The relative sizes of the curved and straight arrows are proportional to liquid flow volumes. The embodiment shown in Figure 3 differs from the embodiment shown in Figure 2 by the sponge (26) being divided onto two sections in Figure 3 with separate feed lances into each sponge section. This allows for individual control of feed liquid into each sponge section and internal sealed surface (38) prevents liquid from the upper section of the sponge from migrating or flowing down to the lower section. The barrier sealing prevents the liquid from the upper portion of sponge (26) from flowing down (curved arrows) but is kept in the upper section of the sponge thus providing better control of liquid flow to each portion of the bottle (straight arrows).

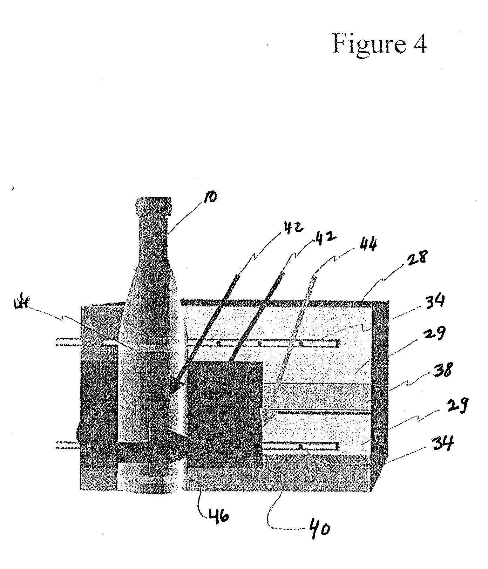

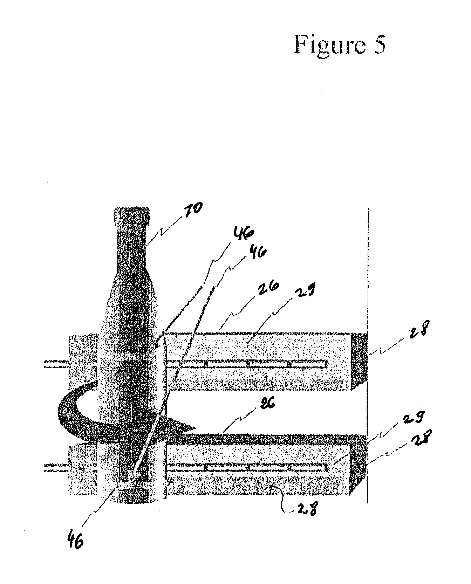

Figure 4 depicts an improved sponge (26) and a portion of an improved contact coating apparatus (28) with a bottle (10) being rotated while contacting the sponge. Lance portions (36) of the coating apparatus are shown for feeding of coating liquid into the lances and into the sponge through holes (34) in the lances. The exterior and interior sealed surfaces are the same as the ones of Figure 3 and also there is a s larger internal sealed section of the front side (40). Sealed section (40) of sponge (26) is positioned to contact the bottle (10) in a region between ridges (46) of bottle (10). Ridges (46) are the portions of bottle (10) where ware and scratching tend to predominately occurred. By sealing section (46), liquid coating occurs predominately in the vicinity of ridges (46) where is mostly desired. Liquid flows out of the sponge through surface (29) that contacts bottle (10). The arrow (44) depicts the flow of liquid through surface (29). Arrows (42) show the direction of liquid flow within the sponge. The relative sizes of the arrows (42) and (44) are proportional to liquid flow volumes. In the body zone the bottle will not be coated or only lightly coated in comparison to ridges (46) depending of the length of the sealed section (40) on surface (29).Figure 5 depicts an improved contact coating apparatus (28) having two improved sponges (26) and with a bottle (10) being rotated while contacting both sponges. The points of contact between each sponge and bottle (10) is in the vicinity of ridges (46) that are shown in light gray and pointed to by arrows (46). Each sponge in Figure 5 is analogous to the sponge in Figure 2 but one lance for each sponge in the embodiment depicted in Figure 5 verses two lances in the sponge depicted in Figure 2. The embodiment depicted in Figure 5 is capable of applying different quantities of liquid to each ridge (46) or even different coating liquids to each ridge (46) of the bottle (10).

Sponge design. The preferred sponge design is shown in Figure 3. The sponge should be an "open cell" type sponge which is a sponge having cells that not totally encapsulated but have open cell walls allowing the passage of liquid from one cell into an adjacent cell. The porosity of the sponge should be sufficient to permit flow sufficient liquid to coat the bottle at the desired coating thickness. The open cells are often referred to as pores. Sponges with pores sizes in the range of from 4 pores per linear centimeter of sponge to 20 pores per centimeter have adequate porosity for flow of liquid of the type typically used to coat bottles.

Sponge material: The material of construction for the sponge must be compatible with the liquid being applied. For organic based or water emulsions of organic coating chemicals, cellulosic sponges are preferred. Polyurethane is also suitable for many liquids and flexible (open cell) polyurethane foams are well known having various porosities. Reticulated foam, that is flexible, open cellfoam having the cell wall removed by fire polishing of solvent extraction are also suitable and benefit from controlled porosity and more uniform flow of liquid through the foam sponge.

Sealing of sponge surfaces: A sealing material is applied to at least one side of the sponge. Preferably the sponge is a rectangular or square shape having 6 sides with 5 of the sides sealed and one unsealed side positioned in the contact coating apparatus to touch the portion of the bottle to be coated with the liquid. Preferably, the coating material is forced to leave the sponge only via the side of the sponge that contacts the bottle as depicted in Figures 2 through 5, which reduces the consumption of liquid dramatically. If the liquid to be applied to the bottle cause the sponge to swell or change shape verses the shape of a dry sponge, the sealing procedure for swellable sponges should be employed.

Sealing of surfaces of swellable sponges: A suitable method for sealing liquid swellable sponges on edges and back side is:
□ Make the sponge wet so that it can swell to maximum dimensions.
□ Throughly squese the sponge to remove excess liquid.
□ Prepare a sealant (preferred sealant for sealing a water containing coating liquid, the sponge sealant is mixture by adding 3 grams of Boscodur to 100 g of BV 57.
□ Apply the sealant formulation by using a brush. Stir well, apply material within 5 minutes.
□ Wait one hour, wet the sponge with a little bit of bottle coating liquid on the side(s) to be sealed again.
□ Repeat above two times more with a clean brush.

Sponge sealing material: The material for sealing the sponge is preferable commercially available sealants such as polyurethane resin in a suitable solvent (acetone CAS no 67-54-1, ethyl acetate CAS no 141-76-6 and methylethyl ketone CAS no 78-93-3) as sold under the trade name BV 57® by Bostik Findley GmbH which is a two part sealant system that requires the use of a hardner sold as Boscodur AF 8650 360 GR® by Bostik Findley GmbH.

Sponge dimensions: The dimensions for the sponge should be based upon the dimensions of the bottle to be coated. The height of the sponge as shown in figures 2 and 3 should be slightly higher than the upper ridge of the bottle and the length of the sponge should be from one times the diameter of the bottle to about 8 times the diameter of the bottle being coated.

Utilization of the sponge and apparatus of the present invention. Application of liquid to the outside surface of a bottle is preferably performed on a bottle that is moving on a conveyor path usually at high speeds. The apparatus for applying a liquid coating of the present invention is designed for direction application (contact coating) through contacting the bottle with the sponge applicator of the present invention to which is fed the liquid to be coated onto the bottle by transfer of liquid onto the bottle surface. The apparatus of the present invention is usually equipped with a sponge that transfers the coating liquid to the bottles and a belt that drives the bottles along the sponge and rotates the bottle while contacting the sponge. The contact coating apparatus is placed over a conveyer belt that transports bottles preferably in a plant that utilizes bottles in a manufacturing process such as a filling plant. The rotating belt and the usually static sponge of the coating machine form a coating lane through which the bottles pass while being transported on the conveyor belt. The bottle rotates while contacting the sponge. While the bottle is revolving and simultaneously passing through the coating lane it takes the coating liquid off the sponge. Preferably the sponge length is chosen to let the bottle revolve 3 times to ensure good coating properties. Preferably the apparatus consists of several lanes, each lane having an applicator.

Preferred liquid for coating bottles utilizing the sponge and apparatus provided by the present invention is Opticoat^{tm} series of cold end coatings sold by ATOFINA Chemical Company. Particularly preferred is Opticoat^{tm} 140 which is a water based emulsion.

## Claims

1. An improved sponge applicator for coating a liquid onto the outside surface of containers comprising an open cell foam having a plurality of surface sections, at least one surface section designed to contact a portion of the container, at least one sealed surface for retarding flow of liquid from the sponge and wherein the sponge has an internal porosity allowing for flow of liquid through the open cell structure of the sponge.

2. The sponge of claim 1 having at least two unsealed surfaces for contacting the container with the sponge with one of the at least two unsealed surface sections designed to contact a different portion of the container than the other unsealed section and the at least one sealed surface retards flow of liquid from the sponge and wherein the sponge has an internal porosity allowing for flow of liquid through the open cell structure of the sponge

3. A method of sealing surfaces of a swellable open-cell foam comprising swelling the foam with liquid, expelling excess liquid and applying a sealant to the surface of the foam while the foam is still in its swelled shape.

4. An improved contact coating apparatus comprising a means for rotating a container to be coated, a sponge coating applicator having several sealed surfaces and at least one unsealed surface, means for contacting the container with an unsealed surface of the sponge coating applicator, and means for supplying coating liquid to the sponge coating applicator.

5. The improved apparatus of claim 4 having at least sponge coating applicators with one sponge coating applicators positioned to contact a bottle being coated by the apparatus at a different portion of the bottle than another sponge coating applicator.

6. The improved apparatus of claim 4 or 5 wherein said container is a glass or plastic bottle.

7. The improved apparatus of anyone of claims 4 to 6 wherein the sponge coating applicator comprises an open cell foam having a plurality of surface sections, at least one surface section designed to contact a portion of the container, at least one sealed surface for retarding flow of liquid from the sponge and wherein the sponge has an internal porosity allowing for flow of liquid through the open cell structure of the sponge.
